# EUROPEAN PATENT APPLICATION

(11) **EP 2 500 132 A1**
(43) Date of publication of application: **19.09.2012**
(21) Application number: 09851275.9
(22) Date of filing: 13.11.2009
(51) Int. Cl.: B23Q 15/12, G05B 19/18

(54) **MACHINE TOOL CONTROL METHOD AND CONTROL DEVICE**

(71) Applicant: Mitsubishi Heavy Industries, Ltd., Tokyo 108-8215 (JP)
(72) Inventor: YASUDA, Chiaki, Takasago, Hyogo-ken 676-8686 (JP); UMEHARA, Ryuichi, Takasago, Hyogo-ken 676-8686 (JP); INOUE, Atsushi, Hiroshima, Hiroshima-ken, 733-8553 (JP); SHIMIZU, Nobuo, Hyogo-ken 676-8686 (JP); MATSUSHITA, Hirokazu, Shiga-ken 520-3080 (JP)
(74) Representative: Henkel, Breuer & Partner
(86) International application number: PCT/JP2009/069342
(87) International publication number: WO 2011/058645

(57) **Abstract**

In the first place, the characteristic frequency of a workpiece before machining and the one at after machining are input (Step S1). In the next place, a region between the characteristic vibration of a workpiece before machining and the one after machining is set in a Campbell diagram (Step S2). Furthermore, the vibration components of a machining tool during machining are input (Step S3). Subsequently, the vibration components of a machining tool during machining are set in the Campbell diagram (Step S4). Thereafter, with respect to the region between the characteristic vibration of a workpiece before machining and the one after machining, the Campbell diagram is used to determine the rotational speeds (operating condition) of the machining tool outside the ranges where the vibration components of the machining tool resonate (Step S5). In the last place, workpiece machining is executed on the basis of the rotational speeds (operating condition) of the machining tool (Step S6). For this reason, the machined surface roughness of the workpiece can be improved, and the machining cost can be reduced.

## Description

### Field

The present invention relates to a machine tool control method and a machine tool control device that prevent chatter vibrations from occurring during machining of a workpiece in a machine tool that performs cutting and the like.

### Background

For example, during cutting, when vibrations of a machining tool in operation resonate with natural vibrations of a workpiece, chatter vibrations are caused. The chatter vibrations cause problems such as deteriorated machining surface roughness of the workpiece and damaged cutting edges of the machining tool due to the vibrations.

A method that enables to solve the problems caused by the chatter vibrations is described in Patent Literature 1, for example. This method includes obtaining vibration data for a workpiece at a current process, estimating whether chatter vibrations will occur at the next process with higher finishing precision by using the obtained vibration data, and modifying machining data for machining the workpiece at the next process based on a result of the estimation as to whether chatter vibrations will occur. When chatter vibrations have occurred in the workpiece at each process, the chatter vibrations at the process are suppressed based on the vibration data for the workpiece, which is obtained at each process. More specifically, the chatter vibrations that have occurred in the workpiece are suppressed by increasing a feed rate of the machining tool, decreasing a cutting speed (the number of revolutions) of the machining tool relative to the workpiece, or decreasing a cutting amount of the machining tool with respect to the workpiece.

### Citation List

### Patent Literature

Patent Literature 1: Japanese Patent Application Laid-open No. 2006-150504

### Summary

### Technical Problem

In the method described in Patent Literature 1, whether chatter vibrations will occur at the next process is estimated based on the vibration data for the workpiece, which is obtained at the current process, and the machining data for machining the workpiece at the next process is modified based on the result of the estimation. However, chatter vibrations cannot always be prevented from occurring. This is because natural vibrations of a workpiece change with changes in mass and rigidity of the workpiece during cutting. Thus, during machining of the workpiece, natural vibrations of the machining tool resonate with the natural vibrations of the workpiece, which causes chatter vibrations. In the method described in Patent Literature 1, operating conditions of the machining tool, such as the feed rate, the number of revolutions, and the cutting amount of the machining tool, are changed to suppress the chatter vibrations.

However, changing the operating conditions of the machining tool during machining of the workpiece causes variations in machining surface roughness of the workpiece between before and after the operating condition change, resulting in deterioration in the machining surface roughness and increase in machining costs due to increase in the machining time.

The present invention has been achieved in view of the above problems, and an object of the invention is to provide a machine tool control method and a machine tool control device that enable to improve machining surface roughness of a workpiece and reduce machining costs. Solution to Problem

According to an aspect of the present invention, a machine tool control method includes: a step of setting natural vibrations of a workpiece to be obtained before and after machining of the workpiece, and setting vibration components of a machining tool to be generated during machining; a step of determining an operating condition of the machining tool out of a range where the vibration components of the machining tool resonate with the natural vibrations of the workpiece within a region of the natural vibrations between before and after the machining; and a step of performing machining of the workpiece based on the determined operating condition of the machining tool.

The machine tool control method performs machining of the workpiece under the operating condition of the machining tool, in which the vibration components of the machining tool do not resonate with the natural vibrations of the workpiece even in a region where the mass and rigidity of the workpiece change during the machining of the workpiece, which prevents chatter vibrations from occurring. Consequently, there is no need to change the operating condition of the machining tool during machining of the workpiece to suppress chatter vibrations. This improves machining surface roughness of the workpiece, and reduces machining costs because its machining time is not increased.

Advantageously, in the machine tool control method, the operating condition of the machining tool is number of revolutions of the machining tool with a feed rate and a cutting amount of the machining tool being constant.

Advantageously, in the machine tool control method, the natural vibrations of the workpiece and the vibration components of the machining tool to be generated during the machining are set on a Campbell diagram.

According to another aspect of the present invention, a machine tool control device includes: a setting unit that sets natural vibrations of a workpiece to be obtained before and after machining of the workpiece, and sets vibration components of a machining tool to be generated during the machining; a determining unit that determines an operating condition of the machining tool out of a range where the vibration components of the machining tool resonate with the natural vibrations of the workpiece within a region of the natural vibrations between before and after the machining; and a control unit that performs machining of the workpiece based on the determined operating condition of the machining tool.

The machine tool control device performs machining of the workpiece under the operating condition of the machining tool, in which the vibration components of the machining tool do not resonate with the natural vibrations of the workpiece even in a region where the mass and rigidity of the workpiece change during the machining of the workpiece, which prevents chatter vibrations from occurring. Consequently, there is no need to change the operating condition of the machining tool during machining of the workpiece to suppress chatter vibrations. This improves machining surface roughness of the workpiece, and reduces machining costs because its machining time is not increased.

### Advantageous Effects of Invention

According to the present invention, chatter vibrations are prevented from occurring, thereby avoiding a situation where an operating condition of a machining tool is changed during machining of a workpiece. This improves machining surface roughness of the workpiece, and prevents increase in the machining time to reduce machining costs. Brief Description of Drawings

FIG. 1 is a schematic configuration diagram of a machine tool according to an embodiment of the present invention and a control device therefor.
FIG. 2 is a Campbell diagram for determining an operation condition of a machining tool.
FIG. 3 is a flowchart of an operation (a control method) of the control device for the machine tool shown in FIG. 1.

### Description of Embodiments

Exemplary embodiments of a machine tool control method and a machine tool control device according to the present invention will be explained below in detail with reference to the accompanying drawings. The present invention is not limited to the embodiments.

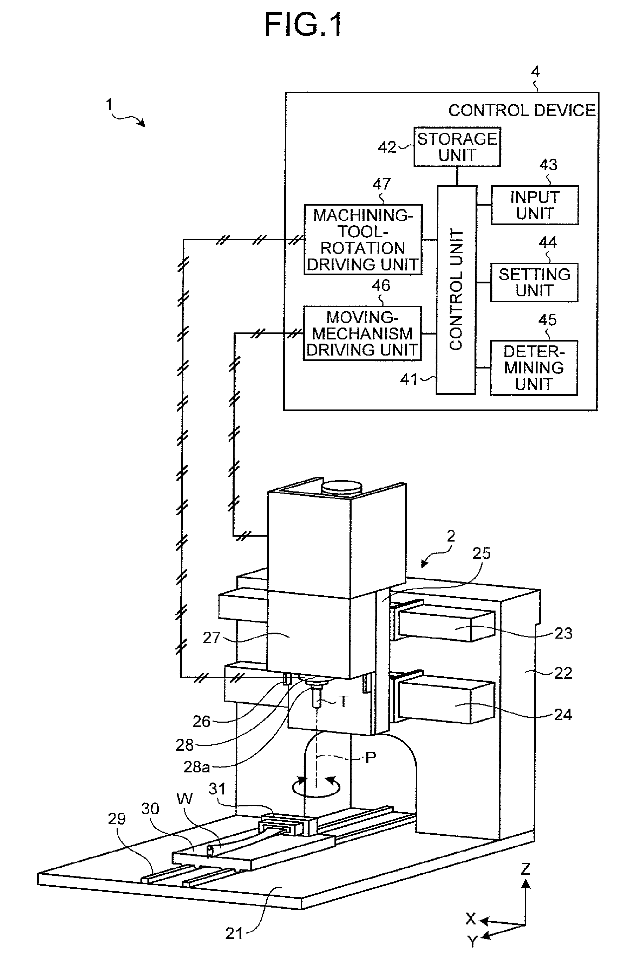

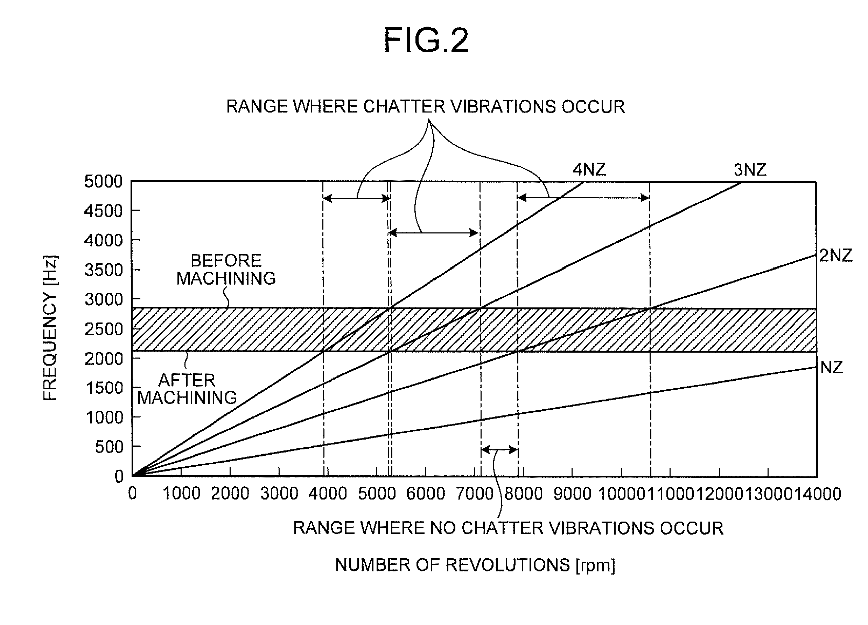

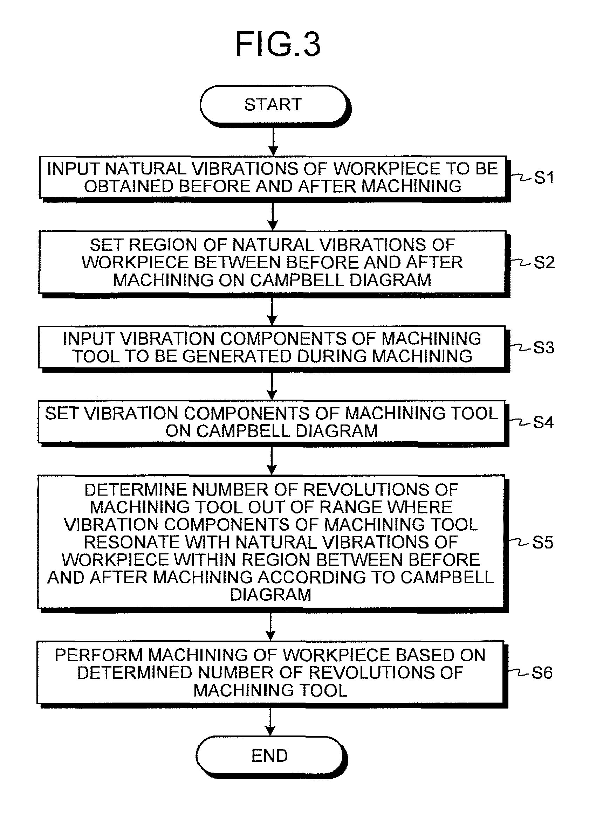

FIG. 1 is a schematic configuration diagram of a machine tool according to an embodiment of the present invention and a control device therefor. FIG. 2 is a Campbell diagram for determining an operating condition of a machining tool. FIG. 3 is a flowchart of an operation (a control method) of the control device for the machine tool shown in FIG. 1.

As shown in FIG. 1, a workpiece machining device 1 as a machine tool includes a machining unit 2 and a control device 4.

A bed 21 is provided at a bottom of the machining unit 2. A gate-shaped column 22 stands on the bed 21. A saddle 25 is supported on a front surface of the column 22 reciprocatably through guides 23 and 24 extending in the X-axis direction (left-right direction). A spindle head 27 is supported on a front surface of the saddle 25 through a guide 26 extending in the Z-axis direction (vertical direction) along which the spindle head 27 can move up and down. A machining head 28 is supported on an undersurface of the spindle head 27 rotatably about a rotation axis P. A machining tool T is held at the machining head 28. The machining head 28 has a damper 28a that absorbs contact pressure generated when the machining tool T contacts with a workpiece W. A table 30 is supported on the bed 21 slidably through a guide 29 extending in the Y-axis direction (front-rear direction). A workpiece holding unit 31 that holds the workpiece W is provided on the table 30. The workpiece W shown in FIG. 1 exemplifies a turbine blade to be used for a gas turbine or the like.

That is, the machining unit 2 is configured to move the machining tool T in the X-axis direction (left-right direction) and the Z-axis direction (vertical direction), and move the workpiece W in the Y-axis direction (front-rear direction). The movements in the X-axis, Z-axis, and Y-axis directions are driven by a moving-mechanism driving unit 46 mentioned below. The machining unit 2 is also configured to rotate the machining tool T about the rotation axis P. The rotation of the machining tool T is driven by a machining-tool-rotation driving unit 47 mentioned below.

The workpiece machining device 1 moves the machining tool T in the X-axis and Z-axis directions while rotating the machining tool T about the rotation axis P, and moves the workpiece W in the Y-axis direction to bring the machining tool T into contact with the workpiece W, thereby performing cutting of the workpiece W.

The control device 4 includes a microcomputer and the like, and controls an operation of the machining unit 2. The control device 4 has a control unit 41. The control unit 41 connects to a storage unit 42, an input unit 43, a setting unit 44, a determining unit 45, the moving-mechanism driving unit 46, and the machining-tool-rotation driving unit 47.

Various information is input to the input unit 43 for determining an operating condition of the machining unit 2 in the determining unit 45 mentioned below. The various information input to the input unit 43 includes natural vibrations of the workpiece W, and vibration components of the machining tool T to be generated during machining. The natural vibrations of the workpiece W include both of those before and after the machining. The natural vibrations of the workpiece W before and after the machining can be obtained by the finite element analysis or experimental modal analysis based on design data for the workpiece W. The vibration components of the machining tool T include a frequency component calculated by a product (NZ) of the number [N] of revolutions of the machining tool T and the number [Z] of cutting edges of the machining tool T, and harmonic components of the frequency component. Some of the various information is stored in advance in the storage unit 42 to be input to the input unit 43, and the other information is input to the input unit 43 by an external input unit (not shown) connected to the input unit 43 from the outside of the control device 4.

The natural vibrations of the workpiece W include those obtained when the workpiece W is machined in a torsion mode and in a bending mode. In a case where the workpiece W is plate-shaped like the turbine blade exemplified in FIG. 1, in the torsion mode, load is applied in a torsional direction when a longitudinally central portion of the workpiece W is machined, for example. In contrast, in the bending mode, load is applied in a bending direction when a longitudinal end of the workpiece W exemplified in FIG. 1 is machined. In the torsion mode, the natural vibrations of the workpiece W are greater, and a difference in the natural vibrations between before and after machining of the workpiece W is greater, and accordingly chatter vibrations are more likely to occur, compared to in the bending mode. Therefore, the natural vibrations obtained when the workpiece W is machined in the torsion mode are described below in the present embodiment.

The setting unit 44 sets the natural vibrations of the workpiece W and the vibration components of the machining tool T during the machining, which have been input to the input unit 43, on a Campbell diagram shown in FIG. 2.

The determining unit 45 refers to the Campbell diagram to determine the operating condition of the machining tool T out of a range where the vibration components of the machining tool T resonate with the natural vibrations of the workpiece W within a region of the natural vibrations between before and after the machining. In the present embodiment, the number of revolutions of the machining tool T is defined as the operating condition of the machining tool T with the feed rate and the cutting amount of the machining tool T being constant. Because the number of revolutions of the machining tool T is used to determine the vibration components of the machining tool T, the number of revolutions is more preferable as the operating condition.

According to programs and data stored in advance in the storage unit 42, the control unit 41 controls the moving-mechanism driving unit 46 and the machining-tool-rotation driving unit 47 primarily based on the operating condition of the machining tool T, which is determined by the determining unit 45.

With reference to the Campbell diagram in FIG. 2 and the flowchart in FIG. 3, control (a control method) of the workpiece machining device 1 by the control device 4 is described below.

The natural vibrations of the workpiece W before and after machining of the workpiece W are first input to the input unit 43 (Step S1). The setting unit 44 then sets a region of the natural vibrations of the workpiece W between before and after the machining on the Campbell diagram (Step S2). In the Campbell diagram shown in FIG. 2, the vertical axis represents the frequency [Hz] while the horizontal axis represents the number of revolutions [rpm]. The setting unit 44 then sets the region (hatched area) of the natural vibrations of the workpiece W between before and after the machining on the Campbell diagram.

The vibration components of the machining tool T during the machining are input to the input unit 43 (Step S3). The setting unit 44 then sets the vibration components of the machining tool T during the machining on the Campbell diagram (Step S4). At Step S4, the setting unit 44 sets the frequency component calculated by the product (NZ) of the number [N] of revolutions of the machining tool T and the number [Z] of cutting edges of the machining tool T, and harmonic components (2NZ, 3NZ, 4NZ...) of the frequency component as the vibration components of the machining tool T during the machining on the Campbell diagram, as shown in FIG. 2. The natural vibrations of the workpiece W and the vibration components of the machining tool T during the machining are set on the Campbell diagram so that the determination of the number of revolutions of the machining tool T is confirmed easily.

The determining unit 45 then refers to the Campbell diagram to determine the number of revolutions of the machining tool T out of a range where the vibration components of the machining tool T resonate with the natural vibrations of the workpiece W within the region of the natural vibrations between before and after the machining (Step S5). This obtains a range of the number of revolutions where no chatter vibrations occur, as shown in FIG. 2.

The control unit 41 then controls the machining-tool-rotation driving unit 47 based on the number of revolutions (operating condition) of the machining tool T while controlling the moving-mechanism driving unit 46, to perform machining of the workpiece W (Step S6), and then this control is finished.

Steps S1 and S2 and Steps S3 and S4 can be performed in the reverse order. That is, it is possible to input first the vibration components of the machining tool T during the machining (Step S3) and set the vibration components of the machining tool T during the machining on the Campbell diagram (Step S4), and then input the natural vibrations of the workpiece W before and after the machining (Step S1) and set the region of the natural vibrations of the workpiece W between before and after the machining on the Campbell diagram (Step S2).

As described above, the machine tool control method and the machine tool control device according to the present embodiment enable to determine the number of revolutions (operating condition) of the machining tool T out of the range where the vibration components of the machining tool T resonate with the natural vibrations of the workpiece W within the region of the natural vibrations between before and after the machining, and perform machining of the workpiece W based on the determined number of revolutions of the machining tool T. Thus, machining of the workpiece W is performed at the number of revolutions of the machining tool T, at which the vibration components of the machining tool T do not resonate with the natural vibrations of the workpiece W, even in a region where the mass and rigidity of the workpiece W change during the machining of the workpiece W. This prevents chatter vibrations from occurring. Consequently, there is no need to change the operating condition of the machining tool T during machining of the workpiece W to suppress chatter vibrations. This improves the machining surface roughness of the workpiece, and prevents increase in the machining time, thereby reducing the machining costs.

### Industrial Applicability

As described above, the machine tool control method and the machine tool control device according to the present invention are suitable for improving the machining surface roughness of the workpiece and reducing the machining costs.

### Reference Signs List

- 1: workpiece machining device (machine tool)
- 2: machining unit
- 21: bed
- 22: column
- 23, 24: guide
- 25: saddle
- 26: guide
- 27: spindle head
- 28a: damper
- 28: machining head
- 29: guide
- 30: table
- 31: workpiece holding unit
- 4: control device
- 41: control unit
- 42: storage unit
- 43: input unit
- 44: setting unit
- 45: determining unit
- 46: moving-mechanism driving unit
- 47: machining-tool-rotation driving unit
- P: rotation axis
- T: machining tool
- W: workpiece

## Claims

1. A machine tool control method comprising:
a step of setting natural vibrations of a workpiece to be obtained before and after machining of the workpiece, and setting vibration components of a machining tool to be generated during machining;
a step of determining an operating condition of the machining tool out of a range where the vibration components of the machining tool resonate with the natural vibrations of the workpiece within a region of the natural vibrations between before and after the machining; and
a step of performing machining of the workpiece based on the determined operating condition of the machining tool.

2. The machine tool control method according to claim 1, wherein the operating condition of the machining tool is number of revolutions of the machining tool with a feed rate and a cutting amount of the machining tool being constant.

3. The machine tool control method according to claim 1 or 2, wherein the natural vibrations of the workpiece and the vibration components of the machining tool to be generated during the machining are set on a Campbell diagram.

4. A machine tool control device comprising:
a setting unit that sets natural vibrations of a workpiece to be obtained before and after machining of the workpiece, and sets vibration components of a machining tool to be generated during the machining;
a determining unit that determines an operating condition of the machining tool out of a range where the vibration components of the machining tool resonate with the natural vibrations of the workpiece within a region of the natural vibrations between before and after the machining; and
a control unit that performs machining of the workpiece based on the determined operating condition of the machining tool.
